(19) **Europäisches Patentamt / European Patent Office / Office européen des brevets**

(11) **EP 4 122 696 A1**

(12) # EUROPEAN PATENT APPLICATION
published in accordance with Art. 153(4) EPC

(43) Date of publication:
**25.01.2023 Bulletin 2023/04**

(21) Application number: **21770850.2**

(22) Date of filing: **25.02.2021**

(51) International Patent Classification (IPC):
**B32B 5/28** (2006.01)    **B32B 27/12** (2006.01)
**C08L 101/02** (2006.01)    **C08J 5/24** (2006.01)
**C08J 7/048** (2020.01)

(52) Cooperative Patent Classification (CPC):
**B32B 5/28; B32B 27/12; C08J 5/24; C08J 7/048;
C08L 101/02**

(86) International application number:
**PCT/JP2021/006958**

(87) International publication number:
**WO 2021/187030 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.03.2020 JP 2020046563**

(71) Applicant: **DIC Corporation
Tokyo 174-8520 (JP)**

(72) Inventors:
• **SHINCHI Tomoaki
Takaishi-shi, Osaka 592-0001 (JP)**
• **YASUMURA Takashi
Takaishi-shi, Osaka 592-0001 (JP)**

(74) Representative: **TBK
Bavariaring 4-6
80336 München (DE)**

(54) **PREPREG AND MOLDED ARTICLE**

(57)    The present invention provides a prepreg including a radical polymerizable resin composition, containing at least a radical polymerizable resin and a polymerization initiator, and a fiber substrate. The prepreg is characterized in that both surfaces of the prepreg are coated with a film having an oxygen permeability of 200 $(ml/m^2 \cdot 24h \cdot atm)$ or less. The prepreg can suppress the delay of the proceeding of curing reaction after storage at room temperature, can allow curing reaction to properly proceed during heating of the prepreg, can suppress the occurrence of a molding defect, and can produce a molded product having excellent workability, and thus can be preferably used for an automobile member, a rail vehicle member, an aerospace plane member, a ship member, a housing equipment member, a sport member, a light vehicle member, a civil engineering and construction member, a casing or the like of an OA device, and the like, and can be particularly preferably used for an automobile member, a housing equipment member, a sport member, etc.

**EP 4 122 696 A1**

**Description**

Technical Field

The present invention relates to a prepreg capable of forming a molded product having excellent workability and moldability and also relates to a molded product thereof.

Background Art

Fiber-reinforced resin composite materials reinforced with reinforcing fibers such as carbon fibers, glass fibers, or the like attract attention because of their characteristics of being excellent in heat resistance and mechanical strength while being lightweight, and usage for applications to various structures, including casings or various members of automobile cars and aircrafts, is expanded. An example of a method used as a method for molding the fiber-reinforced resin composite materials includes curing and molding by autoclave molding or press molding using an intermediate material (uncured material or semi-cured material) called a prepreg produced by impregnating reinforcing fibers with a thermosetting resin.

A resin for a prepreg is generally required to be a resin having both stability at room temperature and curability by heating or the like, and thus thermosetting resins including an epoxy resin composition is generally frequently used. However, a prepreg using an epoxy resin has a problem of requiring refrigeration storage because curing proceeds at room temperature.

In order to solve the problem, development is progressed for a radical polymerizable resin composition capable of realizing high productivity and stability at room temperature (for example, refer to Patent Literature 1).

A radical polymerizable resin composition generally uses a combination of an organic peroxide and a polymerization inhibitor for an attempt to stabilize the gel time of a prepreg (refer to Patent Literature 2).

Citation List

Patent Literature

PTL 1: Japanese Unexamined Patent Application Publication No. 2006-152161
PTL 2: Japanese Patent No. 6532840

Summary of Invention

Technical Problem

In radical polymerization, oxygen contained in the air also functions as a polymerization inhibitor during radical polymerization, and thus when oxygen dissolution in a prepreg proceeds during storage of the prepreg, the originally designed gel time of the prepreg is delayed, and curing reaction does not proceed according to design, thereby causing the problem of bringing about a molding defect due to a curing defect such as uncuring, swelling during curing, or the like.

A problem to be solved by the present invention is to provide a prepreg capable of allowing curing reaction to properly proceed during heating of the prepreg while suppressing the delay of the proceeding of curing reaction after storage of the prepreg at room temperature, capable of suppressing the occurrence of a molding defect, and having excellent workability, and also to provide a molded product thereof.

Solution to Problem

The inventor found that when a specific film is coated on both surfaces of a prepreg having a radical polymerizable resin composition, which contains at least a radical polymerizable resin and a polymerization initiator, and a fiber substrate, the prepreg can suppress the delay of the proceeding of curing reaction after storage at room temperature, can allow the curing reaction to properly proceeds during curing reaction (heating) of the prepreg, and can suppress the occurrence of a molding defect and produce a molded product with excellent workability, leading to the achievement of the present invention.

That is, the present invention relates to a prepreg having a radical polymerizable resin composition, containing at least a radical polymerizable resin and a polymerization initiator, and a fiber substrate.

The prepreg is characterized in that both surfaces of the prepreg are coated with a film having an oxygen permeability of 200 (ml/m$^2$·24h·atm) or less.

In the prepreg of the present invention, the thickness of the film is preferably 5 to 150 μm.

In the prepreg of the present invention, the thickness of the prepreg is preferably 500 μm or less.

In the prepreg of the present invention, the content of the fiber substrate in the prepreg is preferably 30% by mass or more.

In the prepreg of the present invention, a difference in gel time at 140°C between 6 weeks after the production of the prepreg and 2 weeks after the production is preferably less than 10 seconds.

A molded product of the present invention relates to a cured product of the prepreg described above.

Advantageous Effects of Invention

A prepreg of the present invention can suppress the delay of the proceeding of curing reaction after storage at room temperature, can allow the curing reaction to properly proceeds during heating of the prepreg, and can suppress the occurrence of a molding defect and produce a molded product with excellent workability.

Description of Embodiments

<Prepreg>

A prepreg of the present invention has a radical polymerizable resin composition, containing at least a radical polymerizable resin and a polymerization initiator, and a fiber substrate, and is characterized in that both surfaces of the prepreg are coated with a film having an oxygen permeability of 200 (ml/m$^2$·24h·atm) or less. When a specific film is coated on both surfaces of the prepreg having the radical polymerizable resin composition and the fiber substrate, the prepreg is preferred because it can suppress the delay of the proceeding of curing reaction after storage at room temperature, can allow the curing reaction to properly proceed during curing reaction (heating) of the prepreg, can suppress the occurrence of a molding defect, and has excellent workability.

<Radical polymerizable resin composition>

The prepreg of the present invention is characterized by having the radical polymerizable resin composition containing at least the radical polymerizable resin and the polymerization initiator. Using the radical polymerizable resin preferably improves strength and heat resistance. A polymer having a (meth)acryloyl group and an unsaturated polyester polymer can be used as the radical polymerizable resin, and examples thereof include epoxy (meth)acrylate, urethane-modified epoxy (meth)acrylate, urethane (meth)acrylate, and the like. In view of more improving curability etc., urethane-modified epoxy (meth)acrylate and urethane (meth)acrylate are preferred. These radical polymerizable resins can be used alone or in combination of two or more.

The epoxy (meth)acrylate can be produced by reacting an epoxy resin with (meth)acrylic acid and/or (meth)acrylic anhydride. An example of a method for controlling an average number of hydroxyl groups to 1.8 to 2.6 per molecule is to set the average number of epoxy groups and an average number of hydroxyl groups in an epoxy resin and the number of moles of (meth)acrylic acid and/or (meth)acrylic anhydride during reaction.

Examples of the epoxy resin include bisphenol type epoxy resins such as a bisphenol A type epoxy resin, a bisphenol F type epoxy resin, a bisphenol fluorene type epoxy resin, a biscresol fluorene type, and the like, novolac type epoxy resins such as a phenol novolac type epoxy resin, a cresol novolac type epoxy resin, and the like, an oxodolidone-modified epoxy resin, phenol glycidyl ethers of brominated epoxy resins and the like of these resins, polyhydric alcohol glycidyl ethers such as dipropylene glycol diglycidyl ether, trimethylolpropane triglycidyl ether, diglycidyl ethers of bisphenol A alkylene oxide adducts, hydrogenated bisphenol A diglycidyl ether, and the like, alicyclic epoxy resins such as 3,4-epoxy-6-methylcyclohexylmethyl-3,4-epoxy-6-methylcyclohexane carboxylate, 1-epoxyethyl-3,4-epoxycyclohexane, and the like, glycidyl esters such as diglycidyl phthalate ester, diglycidyl tetrahydrophthalate ester, diglycidyl p-oxybenzoate, dimer acid glycidyl ester, and the like, glycidylamines such as such as tetraglycidyl diaminodiphenylmethane, tetraglycidyl-m-xylenediamine, triglycidyl-p-aminophenol, N,N-diglycidylaniline, and the like, heterocyclic epoxy resins such as 1,3-diglycidyl-5,5-dimethylhydantoin, triglycidyl isocyanurate, and the like, and the like. Among these, a bisphenol type epoxy resin, a novolac type epoxy resin, or an oxodolidone-modified epoxy resin is more preferred because a molded product having more excellent mechanical strength and heat resistance can be produced, and the bisphenol A type epoxy resin or oxodolidone-modified epoxy resin is more preferred because a cured product having excellent mechanical strength and the like can be produced. From the viewpoint of heat resistance and curability, the epoxy equivalent of the epoxy resin is preferably 150 to 400. These epoxy resins can be used alone or in combination of two or more.

The reaction of the epoxy resin with (meth)acrylic acid is preferably performed by using an esterification catalyst at 60°C to 140°C. Also, a polymerization inhibitor or the like can be used.

The urethane (meth)acrylate is preferably produced by reaction of polyisocyanate with polyol and hydroxyalkyl (meth)acrylate.

The polyisocyanate is one or more polyisocyanates selected from 2,4'-diphenylmethane diisocyanate, 4,4'-diphenylmethane diisocyanate (MDI), carbodiimide-modified product of 4,4'-diphenylmethane diisocyanate, and polymethylene polyphenyl polyisocyanate, and polymethylene polyphenyl polyisocyanate is preferably contained because the heat resistance of a molded product is more improved.

A polyisocyanate other than the polyisocyanate described above can be used in combination therewith as an isocyanate raw material of the urethane (meth)acrylate. Usable examples of the other polyisocyanate include nurate-modified product, biuret-modified product, and urethaneimine-modified product of diphenylmethane diisocyanate, polyol-modified products modified with a polyol having a number-average molecular weight of 1,000 or less, such as diethylene glycol, dipropylene glycol, or the like; aromatic polyisocyanates such as tolylene diisocyanate (TDI), tolidine diisocyanate, xylylene diisocyanate, 1,5-naphthalene diisocyanate, tetramethylxylene diisocyanate, and the like; alicyclic polyisocyanates such as isophorone diisocyanate (IPDI), hydrogenated diphenylmethane diisocyanate, hydrogenated xylylene diisocyanate, norbornene diisocyanate, and the like; aliphatic polyisocyanates such as hexamethylene diisocyanate, nurate-modified product, biuret-modified product, and adduct of hexamethylene diisocyanate, dimer acid diisocyanate, and the like; and the like.

The polyisocyanate is preferably 20% by mass or more and more preferably 50% by mass or more in the isocyanate raw material of the urethane (meth)acrylate.

Usable examples of the polyol include, but are not particularly limited to, bisphenol A alkylene oxide adduct, aromatic diol alkylene oxide adduct, polyester polyol, acryl polyol, polyether polyol, polycarbonate polyol, polyalkylene polyol, and the like. These polyols can be used alone or in combination of two or more.

Examples of the hydroxyalkyl (meth)acrylate include 2-hydroxyethyl (meth)acrylate, 3-hydroxypropyl (meth)acrylate, 4-hydroxy-n-butyl (meth)acrylate, 2-hydroxypropyl (meth)acrylate, 2-hydorxy-n-butyl (meth)acrylate, 3-hydroxy-n-butyl (meth)acrylate, and the like, and 2-hydroxyethyl (meth)acrylate is preferred. These hydroxyalkyl (meth)acrylates can be used alone or in combination of two or more.

The hydroxyalkyl (meth)acrylate is preferably within a range of 5% to 50% by mass in the resin composition for a prepreg.

The molar ratio (NCO/OH) of isocyanate group (NCO) of an isocyanate compound to hydroxyl group (OH) of a compound having a hydroxyl group, which are used as raw materials of the urethane (meth)acrylate, is preferably 0.7 to 1.5, more preferably 0.8 to 1.3, and still more preferably 0.8 to 1.0.

Examples of the polymerization initiator contained in the radical polymerizable resin composition include, but are not particularly limited to, an organic peroxide, an azo compound, a redox initiator, and the like. Among these, an organic peroxide is preferred from the viewpoint of stability at room temperature (23°C).

Examples of the organic peroxide include a diacyl peroxide compound, a peroxyester compound, a hydroperoxide compound, a ketone peroxide compound, an alkyl perester compound, a percarbonate compound, peroxyketal, and the like, and the organic peroxide can be properly selected according to molding conditions. These polymerization initiators can be used alone or in combination of two or more.

The organic peroxide preferably has a temperature of 70°C to 100°C for obtaining a half-life of 10 hours because the prepreg has a long life at room temperature and curing proceeds by heating within a short time. Examples of such an organic peroxide include 1,6-bis(tert-butylperoxycarbonyloxy)hexane, 1,1-bis(tert-butylperoxy) cyclohexane, 1,1-bis(tert-amylperoxy)cyclohexane, 1,1-bis(tert-hexylperoxy)cyclohexane, tert-butylperoxydiethyl acetate, tert-butylperoxyisopropyl carbonate, tert-amylperoxyisopropyl carbonate, tert-hexylperoxyisopropyl carbonate, di-tert-butylperoxy hexahydroterephthalate, tert-amylperoxy trimethylhexanoate, tert-hexylperoxy-2-ethylhexanoate, and the like.

Because of both excellent curing characteristics and storage stability, the content of the polymerization initiator is preferably 0.3% to 3% by mass relative to the total amount of resin components such as the radical polymerizable resin, and a thermosetting resin described later.

Also, the radical polymerizable resin composition can contain an ethylenically unsaturated monomer because of more improvement in curability and the like.

Examples of the ethylenically unsaturated monomer include styrene compounds such as styrene, methylstyrene, halogenated styrene, divinylbenzene, and the like; monofunctional (meth)acrylate compounds such as methyl (meth)acrylate, ethyl(meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl(meth)acrylate, methylphenoxyethyl (meth)acrylate, morpholine (meth)acrylate, phenylphenoxyethyl acrylate, phenylbenzyl (meth)acrylate, phenyl (meth)acrylate, dicyclopentenyl (meth)acrylate, dicyclopentenyloxyethyl (meth)acrylate, dicyclopentanyl (meth)acrylate, and the like; hydroxyl group-containing (meth)acrylate compounds such as hydroxyethyl (meth)acrylate, hydroxypropyl (meth)acrylate, hydroxybutyl (meth)acrylate, and the like; di(meth)acrylate compounds such as ethylene glycol di(meth)acrylate, propylene glycol di(meth)acrylate, 1,4-butanediol di(meth)acrylate, 1,6-hexanadiol di(meth)acrylate, bisphenol di(meth)acrylate, 1,4-cyclohexanedimethanol di(meth)acrylate, and the like; and the like. These can be used alone or in combination of two or more.

Among these ethylenically unsaturated monomers, in view of odor and handling of hazardous materials in a work environment, and mechanical strength and heat resistance of a molded product, monofunctional (meth)acrylate having a molecular weight of 150 to 250 is preferred, phenoxyethyl (meth)acrylate, methylphenoxyethyl (meth)acrylate, benzyl (meth)acrylate, and methylbenzyl (meth)acrylate are more preferred, and phenoxyethyl (meth)acrylate and benzyl (meth)acrylate are still more preferred.

In addition to the radical polymerizable resin and the polymerization initiator, another component may be used in the radical polymerizable resin composition, and examples of the other component which can be contained include resin components other than the radical polymerizable resin, such as a thermosetting resin, a thermoplastic resin, and the like; a polymerization inhibitor, a curing accelerator, a filler, a low constructive agent, a mold release agent, a thickener, a viscosity-reducing agent, a pigment, an antioxidant, a plasticizer, a flame retardant, an antibacterial agent, a ultraviolet stabilizer, a reinforcing material, a photocuring agent, and the like.

Examples of the thermosetting resin include a vinyl ester resin, a vinyl urethane resin, an unsaturated polyester resin, a phenol resin, a melamine resin, a furan resin, and the like. These thermosetting resins can be used alone or in combination of two or more.

Examples of the thermoplastic resin include a polyamide resin, a polyethylene terephthalate resin, a polybutylene terephthalate resin, a polycarbonate resin, a urethane resin, a polypropylene resin, a polyethylene resin, a polystyrene resin, an acrylic resin, a polybutadiene resin, a polyisoprene resin, these resins modified by copolymerization or the like, and the like. These thermoplastic resins can be used alone or in combination of two or more.

Examples of the polymerization inhibitor include hydroquinone, trimethylhydroquinone, p-tert-butylcatechol, tert-butylhydroquinone, toluhydroquinone, p-benzoquinone, naphthoquinone, hydroquinone monomethyl ether, phenothiazine, copper naphthenate, copper chloride, and the like. These polymerization inhibitors can be used alone or in combination of two or more.

Examples of the curing accelerator include metallic soaps such as cobalt naphthenate, cobalt octenate, vanadyl octenate, copper naphthenate, barium naphthenate, and the like; and metal chelate compounds such as vanadyl acetyl acetate, cobalt acetyl acetate, iron acetyl acetonate, and the like. Also, examples of amines include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylene triamine, pyridine, phenylmorpholine, piperidine, diethanolaniline, and the like. These curing accelerators can be used alone or in combination of two or more.

The filler is an inorganic compound or an organic component, and can be used for adjusting the physical properties of a molded product, such as strength, elastic modulus, impact strength, fatigue durability, etc.

Examples of the inorganic compound include calcium carbonate, magnesium carbonate, barium sulfate, mica, talc, kaolin, clay, cerite, asbestos, pearlite, baryta, silica, quarts sand, dolomite limestone, plaster, aluminum fine powder, hollow balloon, alumina, glass powder, aluminum hydroxide, whitish marble, zirconium oxide, antimony trioxide, titanium oxide, molybdenum dioxide, iron powder, and the like.

Examples of the organic compound include natural polysaccharide powders of cellulose, chitin, and the like, synthetic resin powder, and the like, and usable examples of the synthetic resin powder include a powder of an organic material composed of a hard resin, soft rubber, elastomer or polymer (copolymer), or the like, and particles having a multilayer structure such as a core/shell type or the like. Specific examples thereof include particles composed of butadiene rubber and/or acrylic rubber, urethane rubber, silicone rubber, or the like, a polyimide resin powder, a fluorocarbon resin powder, a phenol resin powder, and the like. These fillers can be used alone or in combination of two or more.

Examples of the mold release agent include zinc stearate, calcium stearate, paraffin wax, polyethylene wax, carnauba wax, and the like. Paraffin wax, polyethylene wax, carnauba wax, and the like are preferred. These mold release agents can be used alone or in combination of two or more.

Examples of the thickener include metal oxides and metal hydroxides such as magnesium oxide, magnesium hydroxide, calcium oxide, calcium hydroxide, and the like, acrylic resin fine particles, and the like. The thickener can be properly selected according to the handleability of the prepreg of the present invention. These thickeners can be used alone or in combination of two or more.

<Fiber substrate>

The prepreg of the present invention is a prepreg having the radical polymerizable resin composition and the fiber substrate and is characterized in which both surfaces of the prepreg are coated with a film having an oxygen permeability of 200 (ml/m²·24h·atm) or less. Examples of the fiber substrate include carbon fibers, glass fibers, silicon carbide fibers, alumina fibers, boron fibers, metal fibers, organic fibers such as aramid fibers, vinylon fibers, Tetrol fibers, and the like. Because a molded product having higher strength and higher elasticity can be obtained, carbon fibers or glass fibers are preferred, and carbon fibers are more preferred. These fiber substrates can be used alone or in combination of two or more.

Various types such as polyacrylonitrile-based, pitch-based, and rayon-based carbon fibers, and the like can be used as the carbon fibers. Among these, polyacrylonitrile-based carbon fibers are preferred because carbon fibers having high strength can be easily produced.

Examples of the shape of the fiber substrate include, but are not particularly limited to, a reinforcing fiber tow formed by bundling reinforcing fiber filaments, a unidirectional material formed by aligning reinforcing fiber tows in a direction, a woven fabric or a nonwoven fabric made of short-cut reinforcing fibers, and the like. The unidirectional material is preferably used as reinforcing fibers because high mechanophysical properties can be obtained by lamination and molding. Also, a surface treatment agent of the fiber substrate is not particularly limited.

The woven fabric is, for example, a stitching sheet or the like represented by a plain fabric, a twill fabric, a satin fabric, or a non-crimped fabric, in which a sheet made of fiber bundles aligned in a direction or a sheet made of fiber bundles laminated with different angles is stitched so that it does no become loose.

The METSUKE (weight per m$^2$ of fibers) of the fiber substrate (reinforcing fiber) is not particularly limited, but is, for example, preferably 10 to 650 g/m$^2$, more preferably 50 to 500 g/m$^2$, and still more preferably 50 to 300 g/m$^2$. A METSUKE of 10 g/m$^2$ or more is preferred because of little variation in fiber width and improvement in mechanophysical properties. A METSUKE of 650 g/m$^2$ or less is preferred because of improvement in impregnation with a resin.

<Film>

The prepreg of the present invention is characterized by being coated with a film having an oxygen permeability of 200 (ml/m$^2$·24h·atm) or less. When both surfaces of the prepreg having the radical polymerizable resin composition and the fiber substrate are coated with the film having an oxygen permeability within the range described above, the prepreg is useful because the proceeding of dissolution of oxygen in the prepreg is suppressed during storage of the resultant prepreg at room temperature, and the delay of the originally designed gel time of the prepreg can be prevented (stability of gel time). Also, when a molded product is formed by using the prepreg, curing reaction can be allowed to proceed according to the design, and the problem of causing a molding defect due to a curing defect such as uncuring or swelling or the like during curing can be suppressed. In addition, the "film" in the present invention is a generally used film, sheet, tape, label, or the like and is applied according to the size and applications of the resultant prepreg, and the film represents including a plastic film, paper, cellophane, and the like.

The film is not particularly limited as long as it has the oxygen permeability described above, and usable examples thereof include the paper and the cellophane, and the plastic films such as polyester films (polyethylene terephthalate, polymethylene terephthalate, polybutylene terephthalate, and the like), nylon films (nylon 66, nylon 6, and the like), a polyvinyl chloride film, a polyvinylidene chloride film, an ethylene-vinyl alcohol copolymer film, and the like. Among these, preferred are the polyester film as a plastic film, a film formed by coating the plastic film on any one of paper, cellophane, a polyethylene film, and a polypropylene film, a film formed by coating silica, alumina, or the like on the plastic film, and the like. The film is particularly preferably a film formed by coating polyvinylidene chloride on a polyethylene terephthalate film or cellophane, a film formed by coating polyvinylidene chloride on a polypropylene film, a film formed by coating silica, alumina, or the like on a polyester film, or the like. These films are useful from the viewpoint of low oxygen permeability, transparency, strength, etc.

In addition, the film is preferably a film subjected to mold release treatment in view of peeling workability of the film. Examples of the mold release treatment include silicone-based mold release coating, non-silicone-based mold release coating, and the like.

The oxygen permeability is 200 (ml/m$^2$·24h·atm) or less, preferably 0.1 to 175 (ml/m$^2$·24h·atm), more preferably 0.5 to 150 (ml/m$^2$·24h·atm), and still more preferably 1 to 125 (ml/m$^2$·24h·atm). The oxygen permeability of 200 (ml/m$^2$·24h·atm) or less is useful because the proceeding of dissolution of oxygen contained in the prepreg is suppressed, the entering of oxygen in the air can be suppressed during storage of the prepreg, oxygen can be prevented from functioning as a polymerization inhibitor, and the delay of the gel time after storage can be suppressed (stability of the gel time).

The thickness of the film is preferably 5 to 150 μm, more preferably 10 to 100 μm, and still more preferably 15 to 50 μm. The range described above is preferred from the viewpoint of workability and strength, and particularly when with a relation between the thickness of the film and the oxygen permeability, a film having a thin thickness while having low oxygen permeability is used, a preferred configuration is formed because it can contribute to workability and suppression of oxygen permeation.

<Prepreg>

The prepreg of the present invention can form a state called an uncured or semi-cured prepreg by using reaction of the radical polymerizable resin composition. After a product is distributed in a prepreg state, a cured product (molded product) may be formed by final curing. When a laminate is formed by using the prepreg, a laminate having closely adhered layers can be formed by, after forming the prepreg, laminating and finally curing the prepreg and other layers. The prepreg can be formed into a thermosetting prepreg, an electron beam curable prepreg, or the like, but from the viewpoint of workability and cost, a thermosetting prepreg is preferred.

The content of the fiber substrate in the prepreg of the present invention is preferably 30% by mass or more, more preferably 35% to 80% by mass, and still more preferably 40% to 70% by mass. With the content of 30% by mass or more, the mechanical strength of the resultant molded product is more improved. The "content of the fiber substrate in the prepreg" of the present invention represents the content ratio of the fiber substrate in the total mass of the fiber substrate and the resin composition in the prepreg in a state where the films coated on both surfaces are peeled off.

A method for producing the prepreg of the present invention is not particularly limited, and the prepreg can be produced by a general known method. For example, a wet method, a hot melt method, a hand layup method, or the like can be used. Among these, when the hand layup method is used, the prepreg can be produced as follows. The radical polymerizable resin composition (resin solution) prepared by mixing the radical polymerizable resin and the polymerization initiator, etc. by using a known mixer such as a planetary mixer, a kneader, or the like is coated on a film having an oxygen permeability of 200 ($ml/m^2 \cdot 24h \cdot atm$) or less by using a doctor knife, a flow coater, or the like (preferably so that the thickness is 10 to 650 $\mu$m). Then, the fiber substrate is impregnated by a hand layup method, and is further held (coated) from the upper surface with a film having an oxygen permeability of 200 ($ml/m^2 \cdot 24h \cdot atm$) or less, then aged by heating at room temperature (23°C) to 70°C for 5 minutes to 48 hours to react the raw materials.

The thickness of the prepreg is preferably 500 $\mu$m or less, more preferably 20 to 500 $\mu$m, still more preferably 50 to 400 $\mu$m, and particularly preferably 100 to 300 $\mu$m. With the thickness of 500 $\mu$m or less, impregnation of the resin is improved, while with the thickness of 20 $\mu$m or more, the prepreg can be preferably easily handled when used as a laminate.

The prepreg is preferably the thermosetting prepreg, and from the viewpoint of more improving productivity, handleability, etc., the gel time at 140°C is preferably within a range of 10 seconds to 90 seconds and more preferably within a range of 15 seconds to 60 seconds. In the present invention, the gel time of the prepreg is measured by a method according to "curing characteristic test" specified in JASO M 406-87.

<Molded product>

A molded product of the present invention relates to a cured product of the prepreg. The molded product is made of the fiber substrate and the radical polymerizable resin composition, and in using the molded product, the films coated on both surfaces of the prepreg are peeled off. A method for producing the molded product from the prepreg formed as described above is not particularly limited, and the molded product can be produced by a general known method. An example of the method used for producing the molded product includes peeling off the films from both surfaces of the prepreg, laminating 8 to 16 prepregs, then putting the resultant laminate in a mold previously heated to 110°C to 160°C and shaping the prepregs by clamping with a compression molding machine, curing the prepregs by holding a molding pressure of 0.1 MPa to 10 MPa, and then taking out the molded product. In this case, the production method preferably includes heating compression molding under a molding pressure maintained at 1 MPa to 8 MPa in a mold having a shear edge at a mold temperature of 120°C to 160°C for a specific time of 1 minute to 4 minutes per mm of the thickness of the molded product.

EXAMPLES

The present invention is described in further detail below by giving examples.

(Preparation of resin composition for prepreg (1))

A resin composition for a prepreg (1) was prepared by mixing 50 parts by mass of a mixture ("Millionate MR-200" manufactured by Tosoh Corporation) of polymethylene polyphenyl polyisocyanate and 4,4'-diphenylmethane diisocyanate (MDI), 50 parts by mass of 4,4'-diphenylmethane diisocyanate (MDI), 66 parts by mass of 2-hydroxyethyl methacrylate (HEMA), 25 parts by mass of Newpol BPE-20 (manufactured by Sanyo Chemical Industries, Ltd., bisphenol A EO adduct, hydroxyl equivalent: 164 g/eq), 31 parts by mass of Newpol BPE-40 (manufactured by Sanyo Chemical Industries, Ltd., bisphenol A EO adduct, hydroxyl equivalent: 204 g/eq), and 3 parts by mass of a polymerization initiator ("Trigonox 122-C80" manufactured by Kayaku Akzo Corporation, organic peroxide).

(EXAMPLE 1)

The resin composition for a prepreg (1) was coated on one of the surfaces of a polyethylene terephthalate (PET) film (trade name: PET Separator, a film manufactured by Nippa Corporation, oxygen permeability: 80 ml/m$^2$·24h·atm) having a thickness of 25 $\mu$m and subjected to mold release treatment, and then impregnated into carbon fibers ("EC3C" manufactured by FOMOSA TAFFETA Co, Ltd.) by a hand layup method so that the carbon fiber content was 50% by mass. Then, the same film was coated on the opposite surface, and aging was performed under the conditions of 45°C for 24 hours, thereby forming a prepreg (1). The molar ratio (NCO/OH) of the raw materials excluding the carbon fibers in the prepreg (1) was 0.94. The thickness of the resultant prepreg was 0.25 mm (250 $\mu$m). A difference in gel time between 6 weeks after and 2 weeks after the production was +6 seconds.

(EXAMPLE 2)

The resin composition for a prepreg (1) was coated on one of the surfaces of a polyethylene terephthalate (PET) film (trade name: PET Separator, a film manufactured by Nippa Corporation, oxygen permeability: 52 ml/m$^2$·24h·atm) having a thickness of 38 $\mu$m and subjected to mold release treatment, and then impregnated into carbon fibers ("EC3C" manufactured by FOMOSA TAFFETA Co, Ltd.) by a hand layup method so that the carbon fiber content was 50% by mass. Then, the same film was coated on the opposite surface, and aging was performed under the conditions of 45°C for 24 hours, thereby forming a prepreg (2). The molar ratio (NCO/OH) of the raw materials excluding the carbon fibers in the prepreg (2) was 0.94. The thickness of the resultant prepreg was 0.25 mm (250 $\mu$m). A difference in gel time between 6 weeks after and 2 weeks after the production was +6 seconds.

(EXAMPLE 3)

The resin composition for a prepreg (1) was coated on one of the surfaces of a cellophane-polyvinylidene chloride-vinyl chloride-vinyl acetate copolymer laminated film (A) (trade name: Cellsy KM-G#300, a film manufactured by Daicel Value Coating Ltd., oxygen permeability: 10 ml/m$^2$·24h·atm) having a thickness of 22 $\mu$m, and then impregnated into carbon fibers ("EC3C" manufactured by FOMOSA TAFFETA Co, Ltd.) by a hand layup method so that the carbon fiber content was 50% by mass. Then, the same film was coated on the opposite surface, and aging was performed under the conditions of 45°C for 24 hours, thereby forming a prepreg (3). The molar ratio (NCO/OH) of the raw materials excluding the carbon fibers in the prepreg (3) was 0.94. The thickness of the resultant prepreg was 0.25 mm (250 $\mu$m). A difference in gel time between 6 weeks after and 2 weeks after the production was +4 seconds.

(EXAMPLE 4)

The resin composition for a prepreg (1) was coated on one of the surfaces of a polyethylene terephthalate (PET) film (trade name: SUNLIKY mold release film, a film manufactured by Tokyo Chemical Industry Co., Ltd., oxygen permeability: 167 ml/m$^2$·24h·atm) having a thickness of 12 $\mu$m and subjected to mold release treatment, and then impregnated into carbon fibers ("EC3C" manufactured by FOMOSA TAFFETA Co, Ltd.) by a hand layup method so that the carbon fiber content was 50% by mass. Then, the same film was coated on the opposite surface, and aging was performed under the conditions of 45°C for 24 hours, thereby forming a prepreg (1). The molar ratio (NCO/OH) of the raw materials excluding the carbon fibers in the prepreg (1) was 0.94. The thickness of the resultant prepreg was 0.25 mm (250 $\mu$m). A difference in gel time between 6 weeks after and 2 weeks after the production was +7 seconds.

(COMPARATIVE EXAMPLE 1)

The resin composition for a prepreg (1) was coated on one of the surfaces of a nylon 6-polypropylene-polyethylene resin laminated film (B) (trade name: DIFAREN 100B, a film manufactured by Cast Film Japan Co., Ltd., oxygen permeability: 2100 ml/m$^2$·24h·atm) having a thickness of 22 $\mu$m, and then impregnated into carbon fibers ("EC3C" manufactured by FOMOSA TAFFETA Co, Ltd.) by a hand layup method so that the carbon fiber content was 50% by mass. Then, the same film was coated on the opposite surface, and aging was performed under the conditions of 45°C for 24 hours, thereby forming a prepreg (4). The molar ratio (NCO/OH) of the raw materials excluding the carbon fibers in the prepreg (4) was 0.94. The thickness of the resultant prepreg was 0.25 mm (250 $\mu$m). A difference in gel time between 6 weeks after and 2 weeks after the production was +14 seconds.

(COMPARATIVE EXAMPLE 2)

The resin composition for a prepreg (1) was coated on one of the surfaces of an unstretched polypropylene film (trade name: Unstretched polypropylene film, a film manufactured by Futamura Chemical Co., Ltd., oxygen permeability: 4800 ml/m$^2$·24h·atm) having a thickness of 20 $\mu$m and subjected to mold release treatment, and then impregnated into carbon fibers ("EC3C" manufactured by FOMOSA TAFFETA Co, Ltd.) by a hand layup method so that the carbon fiber content was 50% by mass. Then, the same film was coated on the opposite surface, and aging was performed under the conditions of 45°C for 24 hours, thereby forming a prepreg (4). The molar ratio (NCO/OH) of the raw materials excluding the carbon fibers in the prepreg (4) was 0.94. The thickness of the resultant prepreg was 0.25 mm (250 μm). A difference in gel time between 6 weeks after and 2 weeks after the production was +19 seconds.

[Formation of molded product]

The films were peeled off from both surfaces of the prepreg formed in each of the examples and the comparative examples, and 12 prepregs, from which the films had been peeled off, were laminated, and the resultant laminate was subjected to heating pressure-molding using a mold of 200 mm × 100 mm under the conditions of a mold temperature of 145°C and a mold closing pressure of 4 MPa for 3 minutes, thereby producing a molded product.

[Hydroxyl equivalent]

The hydroxyl equivalent of a resin was measured by a method according to a neutralization titration method specified in JIS K0070 (1992), and a value measured by the method was used.

[Measurement of thickness of film and prepreg]

Measured by a dial thickness gauge manufactured by Mitutoyo Corporation.

[Measurement of oxygen permeability of film]

A value measured by "Gas Permeability Test method of Film and Sheet" specified in JIS K7126 was used as the oxygen permeability of a film.

[Evaluation of stability of gel time]

The films were separated from both surfaces of the prepreg 2 weeks after and 6 weeks after the production, and the gel time (140°C) of the prepreg, from which the films had been peeled off, was measured 2 weeks after and 6 weeks after from the production by a method according to "curing characteristic test" specified in JASO M 406-87. A sample for evaluation was stored at room temperature (23°C × 55% RH) immediately after from the production and cut into 5 cm × 5 cm, and 24 cut samples were laminated. The laminated prepreg was used as a sample for evaluation for measuring the gel time (seconds).

A difference in gel time of less than 10 seconds has no practical problem.

```
      Difference in gel time = [(gel time 6 weeks after) -

   (gel time 2 weeks after)]
```

A: A difference in gel time between 6 weeks after and 2 weeks after the production is less than 5 seconds.
B: A difference in gel time between 6 weeks after and 2 weeks after the production is 5 seconds or more and less than 10 seconds.
C: A difference in gel time between 6 weeks after and 2 weeks after the production is 10 seconds or more and less than 15 seconds.
D: A difference in gel time between 6 weeks after and 2 weeks after the production is 15 seconds or more.

[Evaluation of moldability]

The surface of the resultant molded product was evaluated by visual observation according to the following criteria.

A: There is neither swelling not uncured portion.
B: There is swelling and/or an uncured portion.

The evaluation results of the prepregs produced as described above and the molded products produced by using the prepregs are shown in Table 1.

[Table 1]

| | Example 1 | Example 2 | Example 3 | Example 4 | Comparative Example 1 | Comparative Example 2 |
|---|---|---|---|---|---|---|
| Film used | PET | PET | Multilayer film (A) | PET | Multilayer film (B) | Unstretched PP |
| Thickness of film [$\mu$m] | 25 | 38 | 22 | 12 | 22 | 20 |
| Oxygen permeability of film [ml/m$^2$·24h·atm] | 80 | 52 | 10 | 167 | 2100 | 4800 |
| Difference in gel time [seconds] | 6 | 6 | 4 | 7 | 14 | 19 |
| Stability of gel time | B | B | A | B | C | D |
| Moldability | A | A | A | A | B | B |

It can be confirmed by Table 1 that the prepregs obtained in Examples 1 to 4 have a short difference in gel time and excellent stability of gel time, and the molded products obtained by using the prepregs have neither swell nor uncured portion and thus have excellent workability and moldability. In particular, Example 3 can be confirmed to be every useful for practical use because the oxygen permeability is suppressed to an extremely low value, and thus a difference in gel time is as small as 4 seconds. Therefore, even when stored at room temperature for a long period of time, the proceeding of oxygen dissolution in the prepreg can be suppressed, and the influence of oxygen in the air can be suppressed.

On the other hand, it can be confirmed that Comparative Examples 1 and 2 use the film having high oxygen permeability for the prepreg and has a longer difference in gel time, and also tend to have poor stability of gel time and poor moldability.

Industrial Applicability

A prepreg of the present invention can suppress the delay of the proceeding of curing reaction after storage at room temperature, can allow curing reaction to properly proceed during heating of the prepreg, can suppress the occurrence of molding defect, and can produce a molded product having excellent workability, and thus can be preferably used for an automobile member, a rail vehicle member, an aerospace plane member, a ship member, a housing equipment member, a sport member, a light vehicle member, a civil engineering and construction member, a casing or the like of an OA device, and the like, and can be particularly preferably used for an automobile member, a housing equipment member, a sport member, etc.

**Claims**

1.   A prepreg comprising a radical polymerizable resin composition containing at least a radical polymerizable resin and a polymerization initiator, and a fiber substrate,
wherein both surfaces of the prepreg are coated with a film having an oxygen permeability of 200 (ml/m$^2$·24h·atm) or less.

2.   The prepreg according to Claim 1, wherein the thickness of the film is 5 to 150 $\mu$m.

3.   The prepreg according to Claim 1 or 2, wherein the thickness of the prepreg is 500 $\mu$m or less.

4.   The prepreg according to any one of Claims 1 to 3, wherein the content of the fiber substrate in the prepreg is 30% by mass or more.

5.   The prepreg according to any one of Claims 1 to 4, wherein a difference in gel time at 140°C between 6 weeks after the production of the prepreg and 2 weeks after the production is less than 10 seconds.

6.   A molded product comprising a cured product of the prepreg according to any one of Claims 1 to 5.

## INTERNATIONAL SEARCH REPORT

| | International application No. |
|---|---|
| | PCT/JP2021/006958 |

### A. CLASSIFICATION OF SUBJECT MATTER

Int. Cl. B32B5/28(2006.01)i, B32B27/12(2006.01)i, C08L101/02(2006.01)i, C08J5/24(2006.01)i, C08J7/048(2020.01)i

FI: C08J5/24 CFF, B32B5/28 Z, B32B27/12, C08L101/02, C08J7/048 CFF

According to International Patent Classification (IPC) or to both national classification and IPC

### B. FIELDS SEARCHED

Minimum documentation searched (classification system followed by classification symbols)

Int. Cl. B32B5/28, B32B27/12, C08L101/02, C08J5/24, C08J7/048

Documentation searched other than minimum documentation to the extent that such documents are included in the fields searched

Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2006-104394 A (ASAHI KASEI CHEMICALS CORP.) 20 April 2006, claims 1, 4, examples 1, 2, paragraphs [0009], [0023], [0025] | 1-4, 6 |
| A | WO 2017/110446 A1 (DIC CORP.) 29 June 2017, entire text | 1-6 |
| A | WO 2019/065209 A1 (DIC CORP.) 04 April 2019, entire text | 1-6 |
| A | WO 2019/065210 A1 (DIC CORP.) 04 April 2019, entire text | 1-6 |
| A | WO 2017/163899 A1 (DIC CORP.) 28 September 2017, entire text | 1-6 |

☒ Further documents are listed in the continuation of Box C.     ☒ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 12.05.2021 | 25.05.2021 |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |

Form PCT/ISA/210 (second sheet) (January 2015)

**INTERNATIONAL SEARCH REPORT**

International application No.

PCT/JP2021/006958

C (Continuation).    DOCUMENTS CONSIDERED TO BE RELEVANT

| Category* | Citation of document, with indication, where appropriate, of the relevant passages | Relevant to claim No. |
|---|---|---|
| A | JP 11-263857 A (SHOWA HIGHPOLYMER CO., LTD.) 28 September 1999, entire text | 1-6 |

INTERNATIONAL SEARCH REPORT

Information on patent family members

International application No.

PCT/JP2021/006958

| Patent Documents referred to in the Report | Publication Date | Patent Family | Publication Date |
|---|---|---|---|
| JP 2006-104394 A | 20.04.2006 | (Family: none) | |
| WO 2017/110446 A1 | 29.06.2017 | US 2019/0002659 A1 entire text EP 3395869 A1 CN 108026300 A KR 10-2018-0097506 A TW 201731930 A | |
| WO 2019/065209 A1 | 04.04.2019 | KR 10-2020-0044897 A CN 111133040 A | |
| WO 2019/065210 A1 | 04.04.2019 | KR 10-2020-0044898 A CN 111164137 A | |
| WO 2017/163899 A1 | 28.09.2017 | US 2019/0092915 A1 entire text EP 3434718 A1 KR 10-2018-0110155 A CN 108779276 A TW 201802158 A | |
| JP 11-263857 A | 28.09.1999 | EP 922727 A1 entire text | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006152161 A

- JP 6532840 B